# FASCICULE DE BREVET EUROPEEN

(11) **EP 3 021 102 B1**
(45) Date de publication et mention de la délivrance du brevet: **15.05.2019**
(21) Numéro de dépôt: 15194001.2
(22) Date de dépôt: 11.11.2015
(51) Int. Cl.: G01M 15/14, F02C 7/20, F01D 21/00, F01D 15/10

(54) **BANC D'ESSAI POUR TURBOMACHINE AXIALE AVEC EOLIENNE VERTICALE**
PRÜFSTAND FÜR AXIALE TURBOMASCHINE MIT VERTIKALER WINDKRAFTANLAGE
TEST BENCH FOR AN AXIAL TURBINE ENGINE WITH A VERTICAL-AXIS WIND TURBINE

(30) Priorité: 17.11.2014 BE 201400822
(43) Date de publication de la demande: 18.05.2016
(73) Titulaire: Safran Aero Boosters SA, 4041 Herstal (BE)
(72) Inventeur: TRAN, Quac Hung, 4020 Liège (BE); LACROIX, Alain, 4160 Anthisnes (BE); Meys, Benoît, 4347 Fexe-Le-Haut-Clocher (BE)
(74) Mandataire: Lecomte & Partners

(56) Documents cités:
- EP-A1- 2 336 507
- WO-A1-2012/171105
- JP-A- H1 019 737

## Description

L'invention a trait à un banc d'essai pour turbomachine. Plus particulièrement l'invention a trait à un banc d'essai pour turbomachine configuré pour la récupération d'énergie générée lors d'un essai.

Le document de brevet WO 2012/171105 A1 divulgue un banc d'essai pour turbomachine comprenant un système de valorisation d'énergie. Le système récupère l'énergie cinétique d'un mélange de gaz de combustion et d'air se déplaçant dans le banc d'essai et transforme cette énergie cinétique en électricité au moyen d'une éolienne. La turbomachine est située dans une chambre d'essai et l'éolienne est située dans un tube en aval de la chambre d'essai. Le tube est couramment appelé « tube collecteur » en ce qu'il collecte les gaz de combustion sortant de la turbomachine. La vitesse élevée des gaz de combustion dans le tube permet d'aspirer un minimum d'air ambiant autour de la turbomachine de manière à satisfaire les conditions d'essai requises en termes de flux d'air minimal dans la chambre d'essai. Le tube collecteur joue en quelque sorte un rôle de pompe du mélange gazeux en vue de son expulsion, il évite également des inversions localisées de l'écoulement en aval de la turbomachine. Le tube collecteur peut en particulier être configuré pour absorber les ondes sonores en aval de la turbomachine. L'éolienne comprend des pales à pas variable pour s'adapter aux différentes vitesses de flux du mélange gazeux atteintes selon la taille des turbomachines testées ; elle est connectée à un alternateur/générateur pour générer l'électricité. Cet enseignement est intéressant en ce que l'éolienne positionnée dans le tube collecteur reçoit un flux de mélange de gaz sensiblement laminaire. Par ailleurs, le tube limite la taille de l'éolienne. L'enseignement se limite cependant aux essais de turbomachines pour lesquelles la vitesse et la pression des gaz d'échappements de la turbomachine, modifiés par la présence de l'éolienne dans le tube, garantissent toujours le minimum d'aspiration d'air ambiant de la chambre d'essai nécessaire pour l'essai. Par ailleurs, la position de l'éolienne dans le tube recevant un mélange gazeux de produits de combustion à haute température impose des contraintes de fonctionnement à l'éolienne qui en augmentent le coût.

Le document de brevet EP 2 336 507 A1 divulgue un banc d'essai pour turbomachine comprenant une turbine destinée à récupérer l'énergie cinétique des gaz d'échappement de la turbomachine. La turbine est disposée entre une chambre d'essai, en amont, dans laquelle est située la turbomachine, et une chambre d'expulsion des gaz d'échappement, en aval. La turbine est configurée pour remplacer la fonction d'un tube collecteur conventionnel qui est généralement d'une longueur importante. En particulier, la turbine est apte à absorber les ondes sonores, par exemple les infrasons. Le rotor de la turbine sur lequel sont montées les pales entrainées en rotation par l'énergie cinétique du flux gazeux, comprend également une hélice fonctionnant en ventilateur de manière à équilibrer les pressions d'air entre la chambre d'essai et la chambre d'expulsion selon les turbomachines testées. Cet enseignement est intéressant en ce que le banc d'essai est sensiblement compact. Il se limite cependant à l'essai de turbomachines pour lesquelles la température des gaz d'échappement ne dépasse pas un seuil critique pour les composants de la turbine. Par ailleurs, la turbine forme un frein à l'écoulement des gaz en aval du moteur, et des inversions localisées de l'écoulement peuvent perturber l'essai des turbomachines.

Le document JP H10 19737 divulgue un autre banc d'essai pour turbomachine. L'invention a pour objectif de proposer une solution de banc d'essai pour turbomachine palliant au moins un inconvénient de l'état de l'art, en particulier de l'état de l'art susmentionné. Plus particulièrement, l'invention a pour objectif de proposer une solution de banc d'essai pour turbomachine, adaptée pour la récupération d'énergie cinétique du flux d'air généré par l'essai de turbomachines de tailles variées.

L'invention a pour objet un banc d'essai pour turbomachine axiale, notamment pour turboréacteur, comprenant : une chambre destinée à recevoir la turbomachine ; un canal vertical d'entrée relié à la chambre en amont de la turbomachine ; et un canal vertical de sortie relié à la chambre en aval de la turbomachine ; au moins une éolienne qui est apte à convertir l'énergie cinétique d'une partie du flux gazeux généré par la turbomachine en énergie mécanique, et qui comprend au moins un ou plusieurs systèmes de conversion de l'énergie mécanique en énergie électrique; remarquable en ce que l'éolienne ou au moins une des éoliennes est située dans le canal vertical d'entrée et/ou dans le canal vertical de sortie. Par « éolienne » on entend « turbine éolienne » ou « aérogénérateur ».

Selon un mode avantageux de l'invention, le banc d'essai comprend au moins un dispositif de projection de gouttelettes d'eau en amont de l'éolienne ou d'une des éoliennes.

Selon un mode avantageux de l'invention, le ou au moins un des dispositifs de projection est disposé directement en amont de l'éolienne correspondante, préférentiellement à une distance de moins de 1m, plus préférentiellement moins de 0.5m, de ladite éolienne.

Selon un mode avantageux de l'invention, le ou chacun des dispositifs de projection est configuré pour augmenter la densité du flux gazeux de 10%, préférentiellement de 20%, plus préférentiellement de 30%.

Avantageusement, l'augmentation de la densité du flux gazeux augmente le débit massique dans le banc d'essai.

Selon un mode avantageux de l'invention, l'éolienne ou au moins une des éoliennes présente un axe de rotation vertical.

Selon un mode avantageux de l'invention, la section du canal vertical d'entrée et/ou du canal vertical de sortie, à hauteur de l'éolienne, est comprise entre 2m² et 200 m², préférentiellement entre 40m² et 70m².

Selon un mode avantageux de l'invention, le banc d'essai comprend une portion coudée reliant le canal vertical d'entrée à la chambre, ledit coude comprenant des déflecteurs pour guider le flux d'air frais depuis une direction verticale vers une direction horizontale, la ou au moins une des éoliennes étant disposée à l'entrée dudit coude.

Selon un mode avantageux de l'invention, le canal vertical d'entrée comprend, à son entrée, un dispositif apte à guider l'écoulement d'air de manière homogène depuis l'atmosphère dans ledit canal d'entrée, la ou au moins une des éoliennes étant disposée entre les déflecteurs et ledit dispositif d'écoulement.

Selon un mode avantageux de l'invention, la ou au moins une des éoliennes comprend des pales à orientation variable.

Selon un mode avantageux de l'invention, la ou au moins une des éoliennes comprend des systèmes de conversion de l'énergie mécanique en énergie électrique.

Selon un mode avantageux de l'invention, au moins un système de conversion de l'énergie mécanique en énergie électrique comprend une commande apte à déterminer la puissance électrique à convertir.

Selon un mode avantageux de l'invention, le banc d'essai comprend un tube collecteur du flux gazeux à la sortie de la turbomachine, ledit tube collecteur étant disposé horizontalement et comprenant, à sa sortie, un diffuseur dans le canal vertical de sortie.

Selon un mode avantageux de l'invention, le canal vertical de sortie comprend, à sa sortie, un dispositif de réduction de bruit, l'éolienne ou une des éoliennes étant disposée entre le diffuseur du tube collecteur et le dispositif de réduction de bruit.

Selon un mode avantageux de l'invention, le dispositif de réduction de bruit comprend des baffles acoustiques et/ou des revêtements acoustiques muraux.

Selon un mode avantageux de l'invention, le canal vertical de sortie comprend des revêtements acoustiques muraux et un dispositif de guidage de l'écoulement de mélange gazeux, lesdits revêtements acoustiques étant situés entre ledit dispositif de guidage et l'éolienne ou une des éoliennes.

Selon un mode avantageux de l'invention, le banc d'essai comprend plusieurs éoliennes dans le canal vertical d'entrée et/ou le canal vertical de sortie.

L'invention a également pour objet un procédé de récupération d'énergie d'un banc d'essai pour turbomachine axiale, notamment pour turboréacteur, remarquable en ce que le banc d'essai est conforme à l'invention, le procédé comprenant la génération d'un flux d'air par la turbomachine axiale et la rotation de la ou d'au moins une des éoliennes du banc d'essai provoquée par ledit flux d'air, la rotation de ladite ou d'au moins l'une desdites éoliennes générant de l'électricité.

Le banc d'essai est avantageusement configuré pour tester des turbomachines de poussée comprise entre 1T et 70T.

Selon un mode avantageux de l'invention, le banc d'essai est configuré pour générer un débit massique d'air dans la chambre compris entre 0,1kg/s et 3000kg/s, préférentiellement entre 200kg/s et 1200kg/s.

Selon un mode avantageux de l'invention, la vitesse de rotation de la ou d'au moins une des éoliennes est comprise entre 50tr/min et 1000tr/min, préférentiellement entre 100tr/min et 500tr/min et le flux d'air au niveau de ladite ou desdites éoliennes présente une vitesse comprise entre 5m/s et 20m/s.

Selon un mode avantageux de l'invention, le ou au moins un des dispositifs de projection de gouttelettes d'eau est configuré de sorte à ce que l'humidité relative « e » de l'air en aval dudit ou desdits dispositifs est comprise entre 95% et 100%, préférentiellement entre 99,9% et 100%.

Selon un mode avantageux de l'invention, l'eau est projetée dans au moins un des canaux verticaux d'entrée et de sortie sous la forme d'un brouillard d'eau et sur une portion supérieure à 50%, préférentiellement supérieure à 80% de la section du ou des canaux.

Selon un mode avantageux de l'invention, le ou au moins un des dispositifs de projection d'eau est destiné à produire un débit d'eau jusqu'à 150kg/s, préférentiellement un débit d'eau compris entre 2kg/s et 40kg/s.

Selon un mode avantageux de l'invention, la ou au moins une des éoliennes est apte à produire une puissance électrique comprise entre 1MW et 15MW, ou comprise entre 0,1MW et 15MW.

L'invention a également pour objet un procédé de fonctionnement d'un banc d'essai pour turbomachine axiale, notamment pour turboréacteur, remarquable en ce que le banc d'essai est conforme à l'invention, la ou au moins une des éoliennes étant configurée pour fonctionner en ventilateur de manière à augmenter le flux d'air dans le banc d'essai.

Les mesures de l'invention sont intéressantes en ce que le banc d'essai pour turbomachine axiale est apte à récupérer en électricité l'énergie cinétique du flux d'air généré dans le banc par l'essai de modèles variés de turbomachines. En effet, l'éolienne positionnée dans un canal vertical à l'entrée et/ou à la sortie du banc d'essai est détachée des zones autour de la turbomachine, notamment en aval et en périphérie, zones dans lesquelles les vitesses de déplacement d'air sont élevées et leur modification critique à la qualité des conditions de l'essai. En outre, la vitesse de l'air dans les canaux verticaux est plus faible relativement à celle dans les zones autour de la turbomachine, et les éoliennes, configurées pour entrer en rotation dans de tels conditions de vitesse d'air, sont aptes à générer une puissance électrique adaptée. Par ailleurs, le flux d'air est sensiblement laminaire dans les canaux verticaux, ce qui est favorable au rendement de la récupération d'énergie.

D'autres caractéristiques et avantages de la présente invention seront mieux compris à l'aide de la description et des dessins parmi lesquels :
- La figure 1 est une vue de l'intérieur d'un banc d'essai conforme à l'invention dans lequel est monté une turbomachine axiale ;
- La figure 2 est une vue en perspective du banc d'essai de la figure 1 dans un premier mode de réalisation ;
- La figure 3 est une vue en coupe simplifiée d'un banc d'essai conforme à l'invention et dans un deuxième mode de réalisation ;
- La figure 4 est une vue en coupe simplifiée d'un banc d'essai conforme à l'invention et dans un troisième mode de réalisation ;

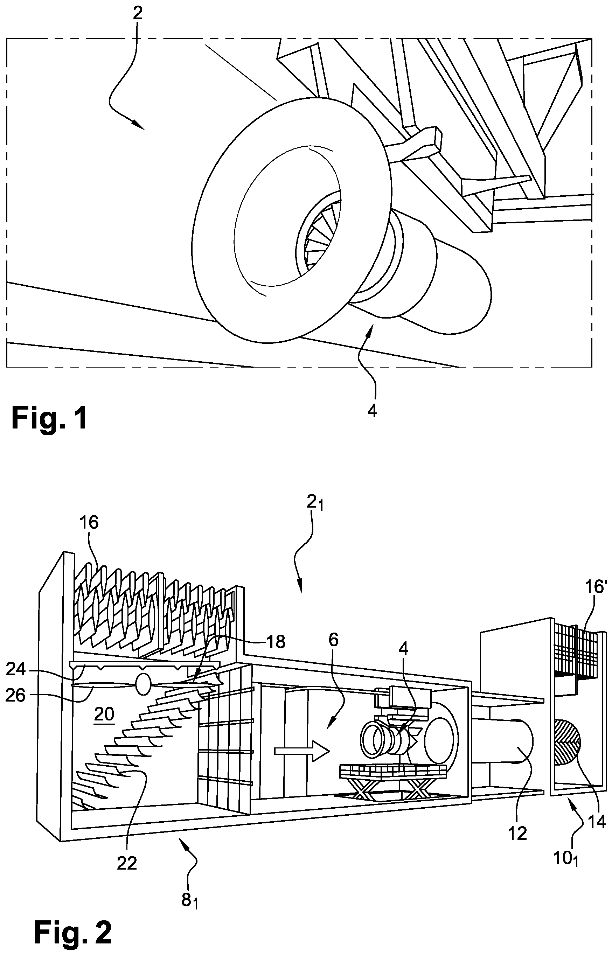

La figure 1 est une vue de l'intérieur d'un banc d'essai 2 conforme à l'invention, banc d'essai dans lequel est monté une turbomachine axiale 4. La turbomachine est en l'occurrence un turboréacteur d'avion. Le turboréacteur 4 est apte, selon le modèle, à produire une poussée de 1T à 70T. Son passage au banc d'essai 2 est effectué dans des circonstances variées : Le turboréacteur 4 peut passer au banc d'essai dans le cadre d'un nouveau développement ou pour un contrôle qualité après fabrication ou suite à une maintenance. Pour ces différents types d'essais, le turboréacteur 4 génère un déplacement d'air dont la masse et la vitesse produisent de l'énergie cinétique. Une partie de cette énergie cinétique est destinée, dans le cadre de l'invention, à être récupérée. Pour l'essai de tels turboréacteurs 4, le banc d'essai 2 est configuré pour générer un débit massique d'air compris entre 0,1kg/s et 3000kg/s, préférentiellement entre 200kg/s et 1200kg/s.

Les figures 2, 3 et 4 sont des vues de bancs d'essai 2₁, 2₂ et 2₃ conformes à l'invention et dans des premier, deuxième, et troisième modes de réalisation, respectivement. Les bancs d'essai 2₁, 2₂ et 2₃ comprennent une chambre d'essai 6 dans laquelle est monté le turboréacteur 4 ; un canal vertical d'entrée 8₁, 8₂ et 8₃ relié à la chambre 6 en amont du turboréacteur 4 ; et un canal vertical de sortie 10₁, 10₂ et 10₃ relié à la chambre 6 en aval du turboréacteur 4. La section des canaux verticaux d'entrée 8₁, 8₂ et 8₃ et de sortie 10₁, 10₂ et 10₃ est comprise entre 2m² et 200 m², préférentiellement entre 40m² et 70m². Les canaux d'entrée 8₁, 8₂ et 8₃ et de sortie 10₁, 10₂ et 10₃ sont en l'occurrence de section carrée. Les bancs d'essai 2₁, 2₂ et 2₃ comprennent également un tube collecteur 12 du flux gazeux produit par l'essai en aval du turboréacteur 4. Le tube collecteur 12 est disposé horizontalement et comprend à sa sortie un diffuseur 14 dans le canal vertical de sortie 10₁, 10₂ et 10₃. Le tube collecteur 12 est par ailleurs configuré pour absorber le bruit produit par l'essai. Les bancs d'essai 2₁, 2₂ et 2₃ comprennent en outre une éolienne 18 et 18' située dans le canal vertical d'entrée 8₁ et 8₃ et/ou dans le canal vertical de sortie 10₂ et 10₃. Dans un mode alternatif de réalisation (non représenté) le banc d'essai conforme à l'invention peut comprendre plusieurs éoliennes dans le canal vertical d'entrée et/ou dans le canal vertical de sortie.

Le terme d' « éolienne » est un terme couramment utilisé pour désigner une turbine éolienne, ou aérogénérateur, destiné à convertir de l'énergie mécanique en énergie électrique. L'« éolienne » peut s'entendre également comme un ventilateur destiné à générer un flux d'air, en l'occurrence par transformation d'une énergie électrique en énergie mécanique.

Le procédé conforme à l'invention mis en oeuvre par les bancs d'essai 2₁, 2₂ et 2₃ est celui de récupérer l'énergie cinétique du flux d'air produit lors d'un essai du turboréacteur 4, la récupération se faisant par la rotation de la ou des éoliennes produite par le flux d'air, ce qui génère de l'électricité. Un autre procédé conforme à l'invention et mis en oeuvre par les bancs d'essai 2₁, 2₂ et 2₃ est celui de produire un surplus de flux d'air dans les bancs d'essai 2₁, 2₂ et 2₃, grâce à la ou aux éoliennes fonctionnant en ventilateur.

La configuration du banc d'essai conforme à l'invention et présenté en relation avec la figure 1 est applicable pour les bancs d'essai 2₁, 2₂ et 2_{3.}

La figure 2 est une vue en perspective d'un banc d'essai 2₁ conforme à l'invention et dans un premier mode de réalisation. Le banc d'essai 2₁ comprend une éolienne 18 située dans le canal vertical d'entrée 8₁ et convertissant en énergie mécanique l'énergie cinétique d'une partie du flux gazeux généré par l'essai du turboréacteur dans le banc et traversant le canal vertical d'entrée 8₁. On peut observer que l'éolienne 18 est orientée dans un axe vertical, elle est précisément située dans une portion coudée 20 du banc d'essai 2₁, portion reliant le canal vertical d'entrée 8₁ à la chambre 6. Des déflecteurs 22 sont situés dans le coude 20 pour guider, en direction de la chambre 6, le flux d'air frais depuis un axe vertical vers un axe horizontal ; une flèche est représentée dans le banc d'essai 2₁ pour illustrer le sens de déplacement de l'air. L'éolienne 18 est située à l'entrée de la portion coudée 20 du banc d'essai 2₁. Dans le mode de réalisation ici présenté, le canal vertical d'entrée 8₁ comprend un dispositif de réduction de bruit 16, en l'occurrence des baffles acoustiques, l'éolienne 18 étant située entre les baffles acoustiques 16 et les déflecteurs 22. Le canal vertical d'entrée 8₁ comprend en l'occurrence plusieurs rangées de baffles acoustiques 16. Le canal vertical de sortie 10₁ comprend également des baffles acoustiques 16', une éolienne peut être disposée entre les baffles acoustiques 16' et le diffuseur 14. Le banc d'essai 2₁ comprend, en outre, un dispositif de projection 24 de gouttelettes d'eau disposé directement en amont de l'éolienne 18 préférentiellement à une distance de moins de 1m, plus préférentiellement moins de 0,5m, de ladite éolienne 18. Ce dispositif de projection 24 est configuré pour augmenter la densité du flux d'air. La densité du flux d'air peut être augmentée de 10%, préférentiellement de 20%, plus préférentiellement de 30%. L'eau est favorablement projetée sous forme d'un brouillard d'eau, la projection étant réalisée sur une portion supérieure à 50%, préférentiellement supérieure à 80%, de la section du canal vertical d'entrée 8₁. Le débit d'eau projetée dans le canal vertical d'entrée 8₁ est réglé de sorte à ce que l'humidité relative de l'air en aval du dispositif de projection puisse être supérieure à 95%, préférentiellement supérieure à 99,9%. Le dispositif de projection d'eau 24 est destiné à produire un débit d'eau jusqu'à 150kg/s, préférentiellement un débit d'eau compris entre 2kg/s et 40kg/s. Cette mesure est intéressante en ce que l'augmentation de la densité de la masse d'air se déplaçant dans le banc d'essai augmente son énergie cinétique. L'augmentation de l'énergie cinétique de l'air est avantageuse pour la récupération d'énergie, son humidité relative élevée est par ailleurs favorable au rendement du turboréacteur.

L'éolienne 18 comprend des pales 26 à orientation variable, la modification de l'orientation des pales 26 permettant de modifier la vitesse de rotation de l'éolienne 18. La vitesse de rotation de l'éolienne est comprise entre 50tr/min et 1000tr/min, préférentiellement entre 100tr/min et 500tr/min et le flux d'air au niveau de l'éolienne 18 présente une vitesse comprise entre 5m/s et 20m/s. Cette mesure est intéressante en ce que le réglage de l'orientation des pales 26 de l'éolienne 18 permet d'établir une vitesse de rotation de l'éolienne adaptée pour le rendement de la récupération d'énergie. L'éolienne 18 comprend, en outre, des systèmes de conversion (non représentés) de l'énergie mécanique en énergie électrique, ceux-ci pouvant comprendre une commande (non représentée) déterminant la puissance électrique à convertir. L'éolienne 18 est configurée pour récupérer une puissance électrique comprise entre 1MW et 15MW.

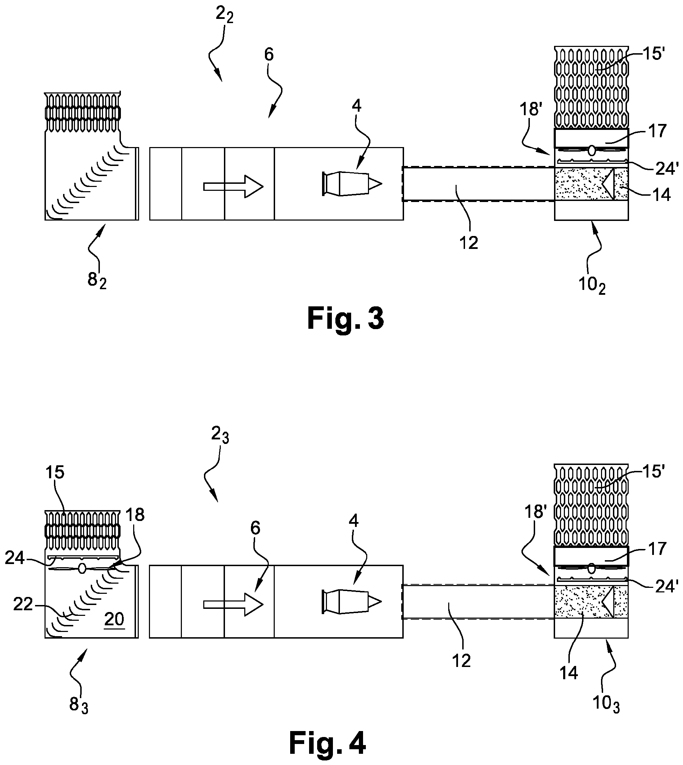

La figure 3 est une vue en coupe simplifiée d'un banc d'essai 2₂ conforme à l'invention et dans un deuxième mode de réalisation. A la différence du premier mode de réalisation présenté en relation avec la figure 2, le banc d'essai 2₂ comprend une éolienne 18' située dans le canal vertical de sortie 10₂ en aval du turboréacteur 4. Le canal vertical de sortie 10₂ comprend dans ce mode de réalisation un dispositif 15' apte à guider l'écoulement du mélange gazeux de manière homogène depuis le canal vertical de sortie 10₂ vers l'atmosphère. On peut observer que l'éolienne 18' est disposée entre le diffuseur 14 et le dispositif 15' ; le dispositif 15' évite la formation d'inversions localisées d'écoulement en aval de l'éolienne. Cette mesure est intéressante pour réduire la sensibilité du banc d'essai 2₂, par exemple à un vent extérieur, et favoriser le rendement de la récupération d'énergie. En outre, le canal vertical de sortie 10₂ comprend des revêtements acoustiques muraux 17 situés entre le dispositif 15' de guidage de l'écoulement du mélange gazeux et l'éolienne 18'. L'axe de rotation de l'éolienne 18' est vertical. On peut observer un dispositif de projection d'eau 24' situé en amont de l'éolienne 18' et permettant d'augmenter la densité du mélange gazeux comme vue en relation avec la figure 2. Le brouillard d'eau produit augmente le débit massique du mélange gazeux. Le mélange gazeux peut favorablement atteindre une humidité relative de 100% en aval du dispositif de projection d'eau 24'. La température du mélange gazeux au niveau du canal vertical de sortie 10₂ est par ailleurs plus élevée que celle en entrée du banc d'essai, elle peut être supérieure à 50°C. Cette mesure est intéressante en ce que la dilatation du mélange gazeux, associée à la température, augmente sa vitesse ; l'augmentation de la densité du flux gazeux ajoutée à cette augmentation de la vitesse est favorable à l'augmentation de l'énergie cinétique du mélange gazeux. Les caractéristiques de l'éolienne 18' sont par ailleurs identiques à celles de l'éolienne vues en relation avec la figure 2, l'éolienne 18' est apte à récupérer une puissance électrique comprise entre 1MW et 15MW.

La figure 4 est une vue en coupe simplifiée d'un banc d'essai 2₃ conforme à l'invention et dans un troisième mode de réalisation. On peut observer qu'une première éolienne 18 est située dans le canal vertical d'entrée 8₃ comme présenté en relation avec la figure 2 et qu'une deuxième éolienne 18' est située dans le canal vertical de sortie 10₃ comme présenté en relation avec la figure 3. Les éoliennes 18 et 18' comprennent des dispositifs de projection d'eau 24 et 24' comme présenté en relation avec les figures 2 et 3. On peut observer que le canal vertical d'entrée 8₃ comprend un dispositif 15 apte à guider l'écoulement d'air de manière homogène de l'atmosphère dans le canal vertical d'entrée 8₃. Cette mesure favorise l'écoulement laminaire de l'air dans le banc d'essai 2₃ en amont de l'éolienne 18. L'éolienne 18 est disposée entre le dispositif 15 et les déflecteurs 22. On peut également voir dans le canal vertical de sortie 10₃ un dispositif 15' apte à guider l'écoulement de mélange gazeux ainsi que des revêtements acoustiques muraux 17, comme présenté en relation avec la figure 3.

## Revendications

1. Banc d'essai (2₁; 2₂; 2₃) pour turbomachine axiale (4), notamment pour turboréacteur, comprenant :
- une chambre (6) destinée à recevoir la turbomachine (4) ;
- un canal vertical d'entrée (8₁ ; 8₂ ; 8₃) relié à la chambre (6) en amont de la turbomachine (4) ; et
- un canal vertical de sortie (10₁ ; 10₂ ; 10₃) relié à la chambre (6) en aval de la turbomachine (4) ;
- au moins une éolienne (18; 18') qui est apte à convertir l'énergie cinétique d'une partie du flux gazeux généré par la turbomachine (4) en énergie mécanique, et qui comprend au moins un ou plusieurs systèmes de conversion de l'énergie mécanique en énergie électrique ;
**caractérisé en ce que** l'éolienne (18; 18') ou au moins une des éoliennes (18 ; 18') est située dans le canal vertical d'entrée (8₁ ; 8₂ ; 8₃) et/ou dans le canal vertical de sortie (10₁ ; 10₂ ; 10₃).

2. Banc d'essai (2₁ ; 2₂; 2₃) selon la revendication 1, **caractérisé en ce qu'**il comprend au moins un dispositif de projection de gouttelettes d'eau (24 ; 24') en amont de l'éolienne (18 ; 18') ou d'une des éoliennes.

3. Banc d'essai (2₁ ; 2₂ ; 2₃) selon la revendication 2, **caractérisé en ce que** le ou au moins un des dispositifs de projection (24 ; 24') est disposé directement en amont de l'éolienne (18; 18') correspondante, préférentiellement à une distance de moins de 1m, plus préférentiellement moins de 0.5m, de ladite éolienne.

4. Banc d'essai (2₁ ; 2₂ ; 2₃) selon l'une des revendications 2 et 3, **caractérisé en ce que** le ou chacun des dispositifs de projection (24 ; 24') est configuré pour augmenter la densité du flux gazeux de 10%, préférentiellement de 20%, plus préférentiellement de 30%.

5. Banc d'essai (2₁ ; 2₂ ; 2₃) selon l'une des revendications 1 à 4, **caractérisé en ce que** l'éolienne (18 ; 18') ou au moins une des éoliennes (18 ; 18') présente un axe de rotation vertical.

6. Banc d'essai (2₁ ; 2₂ ; 2₃) selon l'une des revendications 1 à 5, **caractérisé en ce que** la section du canal vertical d'entrée (8₁ ; 8₂ ; 8₃) et/ou du canal vertical de sortie (10₁ ; 10₂ ; 10₃), à hauteur de l'éolienne (18 ; 18'), est comprise entre 2 et 200m², préférentiellement entre 40m² et 70m².

7. Banc d'essai (2₁ ; 2₃) selon l'une des revendications 1 à 6, **caractérisé en ce qu'**il comprend une portion coudée (20) reliant le canal vertical d'entrée (8₁ ; 8₃) à la chambre (6), ledit coude comprenant des déflecteurs (22) pour guider le flux d'air frais depuis une direction verticale vers une direction horizontale, la ou au moins une des éoliennes (18) étant disposée à l'entrée dudit coude (20).

8. Banc d'essai (2₁ ; 2₂; 2₃) selon l'une des revendications 1 à 7, **caractérisé en ce que** la ou au moins une des éoliennes (18 ; 18') comprend des pales (26) à orientation variable.

9. Banc d'essai (2₁ ; 2₂; 2₃) selon l'une des revendications 1 à 8, **caractérisé en ce que** la ou au moins une des éoliennes (18 ; 18') est apte à produire une puissance électrique comprise entre 1MW et 15MW, ou comprise entre 0,1MW et 15MW.

10. Banc d'essai (2₁ ; 2₂ ; 2₃) selon l'une des revendications 1 à 9, **caractérisé en ce qu'**il comprend un tube collecteur (12) du flux gazeux à la sortie de la turbomachine (4), ledit tube étant disposé horizontalement et comprenant, à sa sortie, un diffuseur (14) dans le canal vertical de sortie (10₁ ; 10₂ ; 10₃).

11. Banc d'essai (2₁ ; 2₂ ; 2₃) selon la revendication 10, **caractérisé en ce que** le canal vertical de sortie (10₁ ; 10₂ ; 10₃) comprend, à sa sortie, un dispositif de réduction de bruit (16' ; 17), l'éolienne (18') ou une des éoliennes (18') étant disposée entre le diffuseur (14) du tube collecteur (12) et le dispositif de réduction de bruit (16' ; 17).

12. Procédé de récupération d'énergie d'un banc d'essai (2₁ ; 2₂ ; 2₃) pour turbomachine axiale (4), notamment pour turboréacteur, **caractérisé en ce que** le banc d'essai (2₁ ; 2₂ ; 2₃) est conforme à l'une des revendications 1 à 11, le procédé comprenant la génération d'un flux d'air par la turbomachine axiale (4) et la rotation de la ou d'au moins une des éoliennes (18 ; 18') du banc d'essai provoquée par ledit flux d'air, la rotation de ladite ou d'au moins l'une desdites éoliennes (18 ; 18') générant de l'électricité.

13. Procédé de récupération d'énergie selon la revendication 12, **caractérisé en ce que** la vitesse de rotation de la ou d'au moins une des éoliennes (18 ; 18') est comprise entre 50tr/min et 1000 tr/min, préférentiellement entre 100tr/min et 500tr/min et le flux d'air au niveau de ladite ou desdites éoliennes (18 ; 18') présente une vitesse comprise entre 5m/s et 20m/s.

14. Procédé de récupération d'énergie selon l'une des revendications 12 et 13, **caractérisé en ce que** le banc d'essai (2₁ ; 2₂ ; 2₃) est conforme à l'une des revendications 2 à 4, le ou au moins un des dispositifs de projection de gouttelettes d'eau (24 ; 24') est configuré de sorte à ce que l'humidité relative (e) de l'air en aval dudit ou desdits dispositifs est compris entre 95% et 100%, préférentiellement entre 99,9% et 100%.

15. Procédé de fonctionnement d'un banc d'essai (2₁ ; 2₂ ; 2₃) pour turbomachine axiale (4), notamment pour turboréacteur, **caractérisé en ce que** le banc d'essai est conforme à l'une des revendications 1 à 11, la ou au moins une des éoliennes (18 ; 18') étant configurée pour fonctionner en ventilateur de manière à augmenter le flux d'air dans ledit banc d'essai.

## Patentansprüche

1. Prüfstand (2₁; 2₂; 2₃) für eine axiale Turbomaschine (4), insbesondere für eine Strahlturbine, umfassend:
- eine Kammer (6), die dafür vorgesehen ist, die Turbomaschine (4) aufzunehmen (4);
- einen vertikalen Einlasskanal (8₁; 8₂; 8₃), der mit der Kammer (6) stromaufwärts der Turbomaschine (4) verbunden ist; und
- einen vertikalen Auslasskanal (10₁; 10₂; 10₃), der mit der Kammer (6) stromabwärts der Turbomaschine (4) verbunden ist;
- mindestens ein Windrad (18; 18 '), das in der Lage ist, die kinetische Energie eines Teils des von der Turbomaschine (4) erzeugten Gasstroms in mechanische Energie umzuwandeln, und mindestens ein oder mehrere Systeme zur Umwandlung mechanischer Energie in elektrische Energie umfasst;
**dadurch gekennzeichnet, dass** sich das Windrad (18; 18') oder mindestens eines der Windräder (18; 18 ') in dem vertikalen Einlasskanal (8₁; 8₂; 8₃) und/oder in dem vertikalen Auslaufkanal (10₁; 10₂; 10₃) befindet.

2. Prüfstand (2₁; 2₂; 2₃) nach Anspruch 1, **dadurch gekennzeichnet, dass** er mindestens eine Vorrichtung zum Ausbringen von Wassertröpfchen (24; 24') stromaufwärts des Windrads (18; 18 ') oder eines der Windräder umfasst.

3. Prüfstand (2₁; 2₂; 2₃) nach Anspruch 2, **dadurch gekennzeichnet, dass** die oder mindestens eine der Vorrichtungen zum Ausbringen (24; 24') direkt stromaufwärts des entsprechenden Windrades (18; 18') platziert ist, vorzugsweise in einem Abstand von weniger als 1 m, mehr besonders bevorzugt von weniger als 0,5 m, von dem besagten Windrad.

4. Prüfstand (2₁; 2₂; 2₃) nach einem der Ansprüche 2 und 3, **dadurch gekennzeichnet, dass** die oder jede der Vorrichtungen zum Ausbringen (24; 24') zum Erhöhen der Dichte des Gasflusses um 10%, vorzugsweise um 20%, besonders bevorzugt um 30%, konfiguriert ist.

5. Prüfstand (2₁; 2₂; 2₃) nach einem der Ansprüche 1 bis 4, **dadurch gekennzeichnet, dass** das Windrad (18; 18') oder mindestens eines der Windräder (18; 18') eine vertikale Rotationsachse aufweist.

6. Prüfstand (2₁; 2₂; 2₃) nach einem der Ansprüche 1 bis 5, **dadurch gekennzeichnet, dass** der Querschnitt des vertikalen Einlasskanals (8₁; 8₂; 8₃) und/oder des vertikalen Auslasskanals (10₁; 10₂; 10₃), auf der Höhe des Windrades (18; 18'), zwischen 2 und 200 m², vorzugsweise zwischen 40 und 70 m², liegt.

7. Prüfstand (2₁; 2₃) nach einem der Ansprüche 1 bis 6, **dadurch gekennzeichnet, dass** er einen gebogenen Teil (20) umfasst, der den vertikalen Einlasskanal (8₁; 8₃) mit der Kammer (6) verbindet, wobei der besagte gebogene Teil Deflektoren (22) zur Führung des Frischluftstroms aus einer vertikalen Richtung zu einer horizontalen Richtung aufweist, und das oder mindestens eines der Windräder (18) am Eingang des besagten gebogenen Teils (20) platziert ist.

8. Prüfstand (2₁; 2₂; 2₃) nach einem der Ansprüche 1 bis 7, **dadurch gekennzeichnet, dass** das oder mindestens eines der Windräder (18; 18') Schaufeln (26) mit variabler Ausrichtung umfasst.

9. Prüfstand (2₁; 2₂; 2₃) nach einem der Ansprüche 1 bis 8, **dadurch gekennzeichnet, dass** das oder mindestens eines der Windräder (18; 18') zur Erzeugung einer elektrischen Leistung geeignet ist, die zwischen 1 MW und 15 MW oder zwischen 0,1 MW und 15 MW liegt.

10. Prüfstand (2₁; 2₂; 2₃) nach einem der Ansprüche 1 bis 9, **dadurch gekennzeichnet, dass** er ein Kollektorrohr (12) für den Gasfluss am Ausgang der Turbomaschine (4) umfasst, wobei besagtes Rohr horizontal platziert ist und an seinem Ausgang einen Diffusor (14) in dem vertikalen Auslasskanal (10₁; 10₂; 10₃) umfasst.

11. Prüfstand (2₁; 2₂; 2₃) nach Anspruch 10, **dadurch gekennzeichnet, dass** der vertikale Auslasskanal (10₁; 10₂; 10₃) an seinem Ausgang eine geräuschmindernde Vorrichtung (16'; 17) umfasst, wobei das Windrad (18') oder eines der Windräder (18') zwischen dem Diffusor (14) des Kollektorrohrs (12) und der geräuschmindernden Vorrichtung (16'; 17) positioniert ist.

12. Verfahren zur Energierückgewinnung von einem Prüfstand (2₁; 2₂; 2₃) für eine axiale Turbomaschine (4), insbesondere für eine Strahlturbine, **dadurch gekennzeichnet, dass** der Prüfstand (2₁; 2₂; 2₃) gemäß einem der Ansprüche 1 bis 11 ist, wobei das Verfahren die Erzeugung eines Luftstroms durch die axiale Turbomaschine (4) und die Rotation des oder mindestens eines der Windräder (18; 18') des Prüfstandes, die durch den besagten Luftstrom hervorgerufen ist, umfasst, und wobei die Rotation des besagten oder mindestens eines der besagten Windräder (18; 18') Strom erzeugt.

13. Verfahren zur Energierückgewinnung nach Anspruch 12, **dadurch gekennzeichnet, dass** die Drehzahl des oder mindestens eines der Windräder (18; 18') zwischen 50 U/min und 1000 U/min, vorzugsweise zwischen 100 und 500 U/min, liegt, und der Luftstrom auf dem Niveau des besagten oder der besagten Windräder (18; 18') eine Geschwindigkeit zwischen 5 m/s und 20 m/s aufweist.

14. Verfahren zur Energierückgewinnung nach einem der Ansprüche 12 und 13, **dadurch gekennzeichnet, dass** der Prüfstand (2₁; 2₂; 2₃) gemäß einem der Ansprüche 2 bis 4 ist, und die oder mindestens eine der Vorrichtungen zum Ausbringen von Wassertröpfchen (24; 24') derart konfiguriert ist, dass die relative Feuchtigkeit (e) der Luft stromabwärts dieser einen oder mehreren Vorrichtungen zwischen 95% und 100%, vorzugsweise zwischen 99,9% und 100%, liegt.

15. Verfahren zum Betreiben eines Prüfstandes (2₁; 2₂; 2₃) für eine axiale Turbomaschine (4), insbesondere für eine Strahlturbine, **dadurch gekennzeichnet, dass** der Prüfstand gemäß einem der Ansprüche 1 bis 11 ist, und wobei das oder mindestens eines der Windräder (18; 18') konfiguriert ist, um als Ventilator zu arbeiten, um so den Luftstrom in dem besagten Prüfstand zu erhöhen.

## Claims

1. Test bench (2₁; 2₂; 2₃) for an axial turbine engine (4), preferably for a turbojet, including:
- a chamber (6) intended to accommodate the turbine engine (4);
- a vertical inlet channel (8₁; 8₂; 8₃) connected to the chamber (6) upstream of the turbine engine (4); and
- a vertical outlet channel (10₁; 10₂; 10₃) connected to the chamber (6) downstream of the turbine engine (4);
- at least one wind power engine (18; 18') capable of converting the kinetic energy of a portion of the gas stream generated by the turbine engine (4) into mechanical energy, and comprising at least one or more systems for converting mechanical energy into electrical energy;
**characterized in that** the wind power engine (18; 18') or at least one of the wind power engines (18; 18') is located in the vertical inlet channel (8₁; 8₂; 8₃) and/or in the vertical outlet channel (10₁; 10₂; 10₃).

2. Test bench (2₁; 2₂; 2₃) according to claim 1, **characterized in that** it includes at least one device (24; 24') for spraying water droplets upstream of the wind power engine (18; 18') or of one of the wind power engines

3. Test bench (2₁; 2₂; 2₃) according to claim 2, **characterized in that** the spraying device or at least one of the spraying devices (24; 24') is placed directly upstream of the corresponding wind power engine (18; 18'), preferably at a distance of less than 1m, more preferably less than 0.5m, from said wind power engine.

4. Test bench (2₁; 2₂; 2₃) according to one of claims 2 and 3, **characterized in that** the spraying device or each of the spraying devices (24; 24') is configured to increase the density of the gas stream by 10%, preferably by 20%, more preferably by 30%

5. Test bench (2₁; 2₂; 2₃) according to one of claims 1 to 4, **characterized in that** the wind power engine (18; 18') or at least one of the wind power engines (18; 18') has a vertical axis of rotation.

6. Test bench (2₁; 2₂; 2₃) according to one of claims 1 to 5, **characterized in that** the section of the vertical inlet channel (8₁; 8₂; 8₃) and/or of the vertical outlet channel (10₁; 10₂; 10₃), at wind power engine (18; 18') height, is between 2 and 200 m², preferably between 40 m² and 70 m².

7. Test bench (2₁; 2₃) according to one of claims 1 to 6, **characterized in that** it includes curved portion (20) connecting the vertical inlet channel (8₁; 8₃) to the chamber (6), said curve including deflectors (22) for guiding the flow of fresh air from a vertical direction to a horizontal direction, the wind power engine or at least one of the wind power engines (18) being placed at the entrance of said curve (20).

8. Test bench (2₁; 2₂; 2₃) according to one of claims 1 to 7, **characterized in that** the wind power engine or at least one of the wind power engines (18; 18') includes blades (26) with variable orientation.

9. Test bench (2₁; 2₂; 2₃) according to one of claims 1 to 8, **characterized in that** the or at least one of the wind power engines (18; 18') is adapted to produce an electrical power comprised between 1 MW and 15 MW, or comprised between 0.1 MW and 15 MW.

10. Test bench (2₁; 2₂; 2₃) according to one of claims 1 to 9, **characterized in that** it includes a collector tube (12) for the gas stream at the outlet of the turbine engine (4), said tube being placed horizontally and including, at its outlet, a diffuser (14) in the vertical outlet channel (10₁; 10₂; 10₃).

11. Test bench (2₁; 2₂; 2₃) according to claim 10, **characterized in that** the vertical outlet channel (10₁; 10₂; 10₃) includes, at its outlet, a noise reducing device (16'; 17), the wind power engine (18') or one of the wind power engines (18') being placed between the diffuser (14) of the collector tube (12) and the noise reducing device (16'; 17).

12. Method for recovering energy from a test bench (2₁; 2₂; 2₃) for an axial turbine engine (4), especially for a turbojet, **characterized in that** the test bench (2₁; 2₂; 2₃) is according to one of claims 1 to 11, the method including the generation of an air flow by the axial turbine engine (4) and the rotation, induced by said air flow, of the wind power engine or at least one of the wind power engines (18; 18') of the test bench, the rotation of said wind power engine or at least one of said wind power engines (18; 18') generating electricity.

13. Method for recovering energy according to claim 12, **characterized in that** the speed of rotation of the wind power engine or at least one of the wind power engines (18; 18') is between 50 r.p.m. and 1000 r.p.m., preferably between 100 r.p.m. and 500 r.p.m. and the air flow at said wind power engine or engines (18 ; 18') has a speed between 5 m/sec and 20 m/sec.

14. Method for recovering energy according to one of claims 12 and 13, **characterized in that** the test bench (2₁; 2₂; 2₃) is according to one of claims 2 to 4, the device or at least one of the devices (24; 24') for spraying droplets of water is configured such that the relative humidity (e) of the air downstream of said device or devices is between 95% and 100%, preferably between 99.9% and 100%.

15. Operating process of a test bench (2₁; 2₂; 2₃) for an axial turbine engine (4), especially for a turbojet, **characterized in that** the test bench is according to one of claims 1 to 11, the wind power engine or at least one of the wind power engines (18; 18') being configured to function as a fan so as to increase the air flow in said test bench.
